# FASCICULE DE BREVET EUROPEEN

(11) **EP 1 524 721 B1**
(45) Date de publication et mention de la délivrance du brevet: **31.10.2018**
(21) Numéro de dépôt: 04292382.1
(22) Date de dépôt: 07.10.2004
(51) Int. Cl.: H01Q 1/36, G02F 1/35, H01Q 1/34

(54) **Procédé pour émettre un signal électromagnétique et antenne associée**
Verfahren zum Aussenden eines elektromagnetischen Signals und zugehörige Antenne
Method for transmitting an electromagnetic signal and associated antenna

(30) Priorité: 17.10.2003 FR 0312146
(43) Date de publication de la demande: 20.04.2005
(73) Titulaire: Etat français représenté par le Délégué Général pour l'Armement, 75509 Paris Cedex 15 (FR)
(72) Inventeur: Pellet, Michel, 75012 Paris (FR)

(56) Documents cités:
- US-A- 5 585 913
- US-A- 6 046 705
- US-A- 6 087 993
- A. IWASAKI, N. AKÖZBEK, B. FERLAND, Q. LUO, G. ROY, C.M. BOWDEN, S.L. CHIN: "a LIDAR technique to measure the filament length generated by a high-peak power femtosecond laser pulse in air", APPLIED PHYSICS B, [Online] vol. B76, no. 3, 7787461, 5 February 2003 (2003-02-05), pages 231-236, canada ISSN: 0946-2171

## Description

L'invention concerne le domaine des antennes et plus particulièrement celui des antennes à plasma aptes à fonctionner sur une très large bande de fréquence.

Les antennes courantes fonctionnent dans une bande de fréquence étroite et leur taille et inversement proportionnelle à la longueur d'onde de fonctionnement.

Dans le domaine des basses fréquences (LF), très basses fréquences (VLF) et extrêmement larges fréquences (ELF), la hauteur des antennes de type quart d'onde doit atteindre plusieurs centaines de mètres à plusieurs centaines de kilomètres, par exemple 750km à 100Hz, et leur construction devient alors problématique. De plus, elles ne peuvent en aucun être facilement déplaçables.

Or ce domaine de fréquence est utile notamment dans le cadre de communication avec un bâtiment immergé tel un sous-marin.

Pour résoudre ce problème, il est connu d'utiliser des antennes à plasma.

Ainsi le brevet US3404403 décrit une antenne à plasma comprenant des moyens pour produire un rayon laser, des moyens aptes à permettre l'utilisation de ce laser en mode pulsé, des moyens aptes à focaliser ce rayon laser à différents points afin d'ioniser une colonne d'air et des moyens pour coupler un signal à la base de la colonne d'air.

On connaît aussi le brevet US6087993 qui décrit une antenne comprenant un générateur de rayon ionisant vertical, des moyens d'alimentation du générateur apte à permettre la production d'une colonne de plasma, le générateur étant apte, par ailleurs à produire un courant modulé dans le plasma. De plus un cristal électro-optique est associé d'une part au rayon laser et d'autre part à un générateur d'un signal modulé en fréquence. Ainsi le cristal module la phase ou l'amplitude du laser, cette modulation se répercutant directement sur la colonne de plasma.

Cependant, les plasmas créés dans le cadre de ces brevets présentent deux inconvénients majeurs, à savoir d'une part ils sont dispersifs donc nécessitent des puissances d'alimentation très importantes et d'autre part, il y a un phénomène de non linéarité dans l'air dû à la puissance importante mise en jeu, cette non linéarité produisant des déformations du signal transmis.

Le but de l'invention est de proposer une antenne facile à construire, facile à déplacer, ne nécessitant pas une puissance d'alimentation très importante et pour laquelle il n'y a pas de phénomène de non-linéarité.

La solution apportée est une antenne comportant un générateur d'un rayonnement laser et des moyens de couplage d'un signal électrique à ce rayonnement laser, cette antenne étant caractérisée en ce que le générateur (1) d'un rayonnement laser (2) est un laser femto-seconde.

Selon une caractéristique particulière, le générateur comporte des moyens aptes à puiser le rayonnement laser.

Selon une caractéristique permettant de contrôler la longueur du filament, le générateur comporte des moyens aptes à modifier la forme des impulsions laser et/ou des moyens aptes à faire varier la puissance du rayonnement laser.

Selon une autre caractéristique, les moyens de couplage comportent un anneau de couplage, de préférence métallique, disposé en sortie du générateur.

Selon une autre caractéristique, les moyens de couplage comportent un modulateur acousto-optique.

L'invention concerne aussi un procédé pour émettre un signal électromagnétique, caractérisé en ce qu'il comporte une étape consistant à générer une filamentation dans de l'air ou dans un autre gaz avec un laser femto-seconde, puis à maintenir cette filamentation en générant des impulsions laser avec ledit laser femto-seconde et à coupler le signal électrique au rayonnement émis par le laser femto-seconde.

Selon une caractéristique particulière, un procédé selon l'invention comporte une étape de contrôle de la longueur de la filamentation.

Selon une caractéristique additionnelle, le contrôle de la longueur de la filamentation est réalisé par régulation de la puissance d'émission du laser.

Selon une autre caractéristique, la valeur de consigne, pour le contrôle de la longueur de la filamentation, correspond à la demi ou au quart de la longueur d'onde de la fréquence porteuse du signal électromagnétique.

D'autres avantages et caractéristiques de la présente invention apparaîtront dans la description de différentes variantes de réalisation de l'invention, en regard des figures annexées parmi lesquelles :
- La figure 1 présente un schéma général de l'invention.
- La figure 2 montre un schéma d'une variante de réalisation de l'invention.

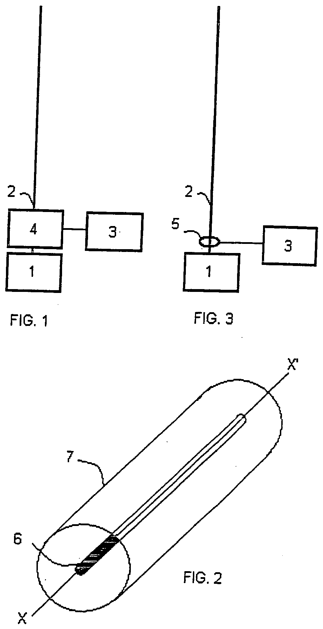

La figure 1 montre, de façon schématique, une antenne selon l'invention.

Cette antenne comprend un générateur 1 d'un rayonnement laser 2, des moyens de génération 3 d'un signal électrique, des moyens 4 de couplage de ce signal électrique audit rayonnement laser 2 et ce générateur 1 d'un rayonnement laser 2 est un laser femto-seconde.

Ce laser femto-seconde fonctionne, dans ce mode de réalisation en mode pulsé et dans l'air et il crée, comme montré sur la figure 2, non pas une colonne de plasma comme dans le cas de l'état de la technique, mais une filamentation c'est-à-dire une colonne 7 dans laquelle l'indice de réfraction est croissant depuis l'extérieur vers l'intérieur et qui de ce fait engendre une ionisation 6 uniquement au niveau de l'axe de symétrie de la colonne donc une ionisation filamenteuse 6 et non pas de toute la colonne 7, ce qui réduit considérablement la puissance à mettre en jeu pour maintenir l'ionisation et supprime les problèmes de non-linéarité.

La figure 3 montre plus précisément les moyens de couplage 4 selon une variante de réalisation particulière.

Les moyens de couplage du signal électrique avec le laser sont constitués par un anneau métallique 5, à savoir un anneau en cuivre ou en tout autre matériau conducteur, disposé juste en sortie du laser femto-seconde 1 et de telle manière que le rayonnement laser passe par le centre du cercle constitué par l'anneau 5. Ainsi, les moyens de génération 3 d'un signal électrique fournissent un signal à transmettre au sein d'un signal généré à la fréquence porteuse.

Ce signal électrique est généré par des moyens connus et ce signal électrique est transmis à l'anneau de couplage 5 qui agit tel une électrode sur la filamentation laser en injectant dans ce filament le signal modulé qui est ainsi émis électramagnétiquement.

Pour le fonctionnement de l'antenne, soit le signal appliqué à l'anneau de couplage doit avoir une fréquence maximale compatible avec la fréquence d'échantillonnage du filament ionisé, soit le système utilise la relaxation du filament pour pouvoir émettre.

Donc une antenne selon l'invention est mobile et l'émission est faite discrètement avec un rendement proche de un. De plus, aucune installation d'infrastructure fixes n'est nécessaire pour l'émission. Aucun aéronef, ballon ou autre ne sera nécessaire pour ériger l'antenne d'émission. L'antenne est constituée par une filamentation ionisée créé par un laser femto-seconde dirigé vers le haut. La fréquence de répétition de ce laser est en accord avec la fréquence minimale d'échantillonnage de Shannon correspondant à la fréquence VLF/LF λ que l'on désire émettre. La puissance du LASER est ajustée afin que la longueur du plasma soit en permanence égale à la longueur d'onde d'accord du système, à savoir λ, λ/4 ou λ/2 suivant les modes souhaités. Pour un accord en λ,/2, l'impédance vue à la base de l'antenne serait ohmique et vaudrait 73Ω, pour un accord en λ/4.

Le coté immatériel de l'antenne permet de s'affranchir de la plupart des défauts et difficultés liées à la taille énorme des antennes d'émission indispensable pour rayonner de l'énergie à cette gamme de fréquence. Son accord peut se faire de manière instantanée par adaptation de longueur et donc supprimer les dispositifs d'accord que l'on doit insérer entre les émetteurs proprement dits et les antennes d'émission. Ainsi l'accord suit la modulation et autorise ainsi des modulations totalement impossibles à ce jour. Le débit et la protection de l'information sont largement accru par rapport à l'état de la technique et la résistance aux intempéries est sans commune mesure avec ce qui est connu à ce jour. On peut réaliser des émetteurs mobiles qui sont aisément projetables, par exemple à partir d'une plate-forme terrestre, à partir d'une plate-forme navale ou à partir d'une plateforme aérienne. De ce fait il est possible de déployer des stations suivant les besoins lors de déploiements lointains de sous-marins ou bien au contraire de disposer d'une station au plus près des hautes autorités nationales qui pourraient ainsi donner leurs ordres aux porteurs d'armes sans passer par les réseaux d'infrastructures.

La possibilité d'utiliser des dipôles en demi-ondes et non en quart d'onde permet de s'affranchir de la nécessité du plan de sol où le couplage de la source électrique au filament LASER doit être placé au milieu de la longueur du filament

Bien entendu, de nombreuses modifications peuvent être apportées aux exemples de réalisation précédemment décrits sans sortir du cadre de l'invention. Ainsi, bien que l'exemple de réalisation concerne plus particulièrement les fréquences basses, l'invention peut être appliquée à toutes les gammes de fréquences dès lors qu'elles utilisent une antenne fouet pour l'émission électromagnétique.

Par ailleurs, cette antenne peut aussi être utilisée pour la réception d'un signal électromagnétique.

De plus, le fonctionnement d'une antenne selon l'invention n'est pas limitée à un filament vertical et ce filament peut être généré dans n'importe quelle direction.

## Revendications

1. Antenne comportant un générateur d'un rayonnement laser et des moyens de couplage d'un signal électromagnétique électrique à ce rayonnement laser, cette antenne étant **caractérisée en ce que** le générateur (1) d'un rayonnement laser (2) est un laser femto-seconde configuré pour créer une colonne dans laquelle l'indice de réfraction est croissant depuis l'extérieur vers l'intérieur, ce qui engendre une ionisation uniquement au niveau de l'axe de symétrie de la colonne donc une ionisation filamenteuse.

2. Antenne selon la revendication 1, **caractérisée en ce que** le générateur (1) est apte à générer des impulsions laser.

3. Antenne selon la revendication 2, **caractérisée en ce que** le générateur (1) est apte à générer des impulsions laser de forme et de puissance variables .

4. Antenne selon l'une quelconque des revendications 1 à 3, **caractérisée en ce que** les moyens de couplage comportent un anneau de couplage, de préférence métallique, disposé en sortie du générateur.

5. Antenne selon l'une quelconque des revendications 1 à 3, **caractérisée en ce que** les moyens de couplage comportent un modulateur acousto-optique.

6. Procédé pour émettre un signal électromagnétique, **caractérisé en ce qu'**il comporte une étape consistant à générer une filamentation dans de l'air ou dans un autre gaz avec un laser femto-seconde, puis à maintenir cette filamentation en générant des impulsions laser avec ledit laser femto-seconde et à coupler le signal électromagnétique électrique au rayonnement émis par le laser femto-seconde.

7. Procédé selon la revendication 6, **caractérisé en ce qu'**il comporte une étape de contrôle de la hauteur/longueur de la filamentation.

8. Procédé selon la revendication 7, **caractérisé en ce que** le contrôle de la hauteurlongueur de la filamentation est réalisé par régulation de la puissance d'émission du laser.

9. Procédé selon l'une quelconque des revendications 6 à 8, **caractérisé en ce que** la valeur de la consigne pour le contrôle de la hauteur/longueur de la filamentation correspond à la demi ou au quart de la fréquence porteuse du signal électromagnétique.

## Patentansprüche

1. Antenne, die einen Laserstrahlungsgenerator umfasst und Mittel zum Koppeln eines elektrischen elektromagnetischen Signals mit dieser Laserstrahlung, wobei diese Antenne **dadurch gekennzeichnet ist, dass** der Generator (1) einer Laserstrahlung (2) ein Femtosekundenlaser ist, der konfiguriert ist, eine Säule zu schaffen, in der der Brechungsindex von außen nach innen zunimmt, was eine Ionisation nur auf Höhe der Symmetrieachse der Säule und somit eine fadenartige Ionisation erzeugt.

2. Antenne nach Anspruch 1, **dadurch gekennzeichnet, dass** der Generator (1) in der Lage ist, Laserimpulse zu erzeugen.

3. Antenne nach Anspruch 2, **dadurch gekennzeichnet dass** der Generator (1) in der Lage ist, Laserimpulse veränderlicher Form und Leistung zu erzeugen.

4. Antenne nach einem beliebigen der Ansprüche 1 bis 3, **dadurch gekennzeichnet, dass** die Kopplermittel einen Kopplerring umfassen, der vorzugsweise metallisch und am Ausgang des Generators angeordnet ist.

5. Antenne nach einem beliebigen der Ansprüche 1 bis 3, **dadurch gekennzeichnet, dass** die Kopplermittel einen optoakustischen Modulator umfassen.

6. Verfahren zur Ausgabe eines elektromagnetischen Signals, **gekennzeichnet dadurch, dass** es eine Phase umfasst, die darin besteht, eine Filamentierung in Luft oder in einem anderen Gas mit einem Femtosekundenlaser zu erzeugen, dann diese Filamentierung durch Erzeugen von Laserimpulsen mit besagtem Femtosekundenlaser beizubehalten und das elektrische elektromagnetische Signal mit dem vom Femtosekundenlaser ausgegebenen Strahl zu koppeln.

7. Verfahren nach Anspruch 6, **gekennzeichnet dadurch, dass** es eine Phase der Steuerung der Höhe/Länge der Filamentierung umfasst.

8. Verfahren nach Anspruch 7, **gekennzeichnet dadurch, dass** die Steuerung der Höhe/Länge der Filamentierung durch Regelung der Abgabeleistung des Lasers verwirklicht wird.

9. Verfahren nach einem beliebigen der Ansprüche 6 bis 8, **gekennzeichnet dadurch, dass** der Wert der Vorgabe für die Steuerung der Höhe/Länge der Filamentierung der Hälfte oder einem Viertel der Trägerfrequenz des elektromagnetischen Signals entspricht.

## Claims

1. An antenna comprising a generator of a laser radiation and means for coupling an electrical electromagnetic signal to this laser radiation, the antenna being **characterised in that** the generator (1) of a laser radiation (2) is a femtosecond laser configured to create a column in which the refractive index increases from the outside to the inside, thus generating an ionization only at the axis of symmetry of the column, hence a filamentous ionization.

2. The antenna according to claim 1, **characterised in that** the generator (1) is adapted to generate laser pulses.

3. The antenna according to claim 2, **characterised in that** the generator (1) is adapted to generate laser pulses of variable form and power.

4. The antenna according to any one of claims 1 to 3, **characterised in that** the coupling means comprise a coupling ring, preferably a metal coupling ring, disposed at the generator output.

5. The antenna according to any one of claims 1 to 3, **characterised in that** the coupling means comprise an acousto-optical modulator.

6. A method for transmitting an electromagnetic signal, **characterised in that** it comprises a step consisting in generating a filamentation in air or in another gas with a femtosecond laser, and then maintaining this filamentation by generating laser pulses with said femtosecond laser and coupling the electrical electromagnetic signal to the radiation transmitted by the femtosecond laser.

7. The method according to claim 6, **characterised in that** it comprises a step of controlling the height/length of the filamentation.

8. The method according to claim 7, **characterised in that** the control of the height/length of the filamentation length is performed by regulating the transmitted laser power.

9. The method according to any one of claims 6 to 8, **characterised in that** the set value for controlling the height/length of the filamentation corresponds to one-half or one-quarter the carrier frequency of the electromagnetic signal.
